**Europäisches Patentamt**

**European Patent Office**

**Office européen des brevets**

(19)

(11) Veröffentlichungsnummer: **0 135 526**
**B1**

(12) **EUROPÄISCHE PATENTSCHRIFT**

(45) Veröffentlichungstag der Patentschrift:
05.11.86

(21) Anmeldenummer: 84900699.4

(22) Anmeldetag: 10.02.84

(86) Internationale Anmeldenummer:
PCT/AT 84/00003

(87) Internationale Veröffentlichungsnummer:
WO 84/03276 (30.08.84 Gazette 84/21)

(51) Int. Cl.⁴: **C 04 B 35/04, C 10 J 3/20,
C 21 B 13/14**

(54) FEUERFESTE AUSKLEIDUNG VON KOHLEVERGASERN.

(30) Priorität: 15.02.83 AT 511/83

(43) Veröffentlichungstag der Anmeldung:
03.04.85 Patentblatt 85/14

(45) Bekanntmachung des Hinweises auf die Patenterteilung:
05.11.86 Patentblatt 86/45

(84) Benannte Vertragsstaaten:
BE CH DE FR GB LI LU NL SE

(56) Entgegenhaltungen:
DE-A-2 521 090
US-A-4 248 638

Chemical Abstracts, Vol. 98, No. 16, 18 April 1983,
Columbus, Ohio (US), see page 304, abstract
131282q, JP, A, 57183360 (SHINAGAWA
REFRACTORIES), 11 November 1982
Chemical Abstracts, Vol. 94; No. 18, 4 May 1981,
Columbus, Ohio (US), Shimada, Kohei et al.:
"Application of unburned magnesiacarbon brick
for ladle furnace", see page 292, abstract 144174y,
Taikabutsu 1980, Z73, 577-9(Japan)

(73) Patentinhaber: Veitscher Magnesitwerke-Actien-
Gesellschaft, Schubertring 10-12, A-1010 Wien (AT)
Patentinhaber: VOEST-ALPINE Aktiengesellschaft,
Werksgelände, A-4010 Linz (AT)
Patentinhaber: Korf Engineering GmbH, Neusser
Strasse 111, D-4000 Düsseldorf 1 (DE)

(72) Erfinder: GULAS, Hans-Jürgen, Magnesitstrasse 6,
A-8707 Leoben (AT)
Erfinder: HORAK, Josef, Otto Weininger-Gasse 6,
A-1130 Wien (AT)
Erfinder: SULZBACHER, Horst, Dirnböckweg 5,
A-8700 Leoben (AT)
Erfinder: PAPST, Gero, Wendelin Ernst-Strasse 9,
D-7580 Bühl-Weitenung (DE)

(74) Vertreter: Kliment, Peter, Dipl.-Ing. Mag.-jur.,
Singerstrasse 8, A-1010 Wien (AT)

## Beschreibung

Die Erfindung betrifft die feuerfeste Auskleidung von Kohlevergasern für die Erzeugung von Reduktionsgas in Bereichen, in welchen Schlacken mit einem $CaO/SiO_2$-Molverhältnis unter 2 in schmelzflüssiger Form vorliegen.

Nach dem aus der EP-B 0 010 627 bekannten Verfahren werden in einem Einschmelzvergaser flüssiges Roheisen und Reduktionsgas erzeugt, indem heiße Eisenschwammpartikel, gegebenenfalls unter Zugabe von Zuschlagstoffen, zu flüssigem Roheisen oder Stahlvormaterial eingeschmolzen werden und aus zugeführter Kohle und oberhalb der Schmelze eingeblasenem sauerstoffhaltigem Gas die zum Schmelzen erforderliche Wärme und Reduktionsgas erzeugt werden. Dabei wird im Einschmelzvergaser ein Kohlefließbett gebildet, dessen Temperatur im unteren Bereich durch die dort erfolgende Zufuhr des sauerstoffhaltigen Gases auf einen Wert zwischen 2000 und 2500°C gehalten wird und dessen Temperatur nach oben bis zu einem Wert zwischen 1000 und 1400°C abnimmt und dessen Höhe wenigstens 1,5 m beträgt, so daß auch für gröbere Eisenschwammpartikel mit einer Größe oberhalb 3 mm durch die Staudruck- und Auftriebskraft im Kohlefließbett eine Verweilzeit in der Größenordnung von einigen Sekunden gewährleistet ist. Dieses Verfahren kann auch ohne Aufgabe von Eisenschwamm betrieben werden, so daß nur Reduktionsgas erzeugt wird.

Die feuerfeste Auskleidung der für dieses Verfahren eingesetzten Kohlevergaser unterliegt einer hohen thermischen und chemischen Beanspruchung, die vor allem im Angriff der infolge des Vorliegens von Kohleaschen auftretenden sauren Schlacken, die ein $CaO/SiO_2$-Molverhältnis von unter 2 und zumeist weit unter 2 aufweisen, und in der Abrasion und Erosion der Steine besteht.

Die üblicherweise bei der Roheisenerzeugung und Kohlevergasung angewendeten Schamotte- und Hochtonerdesteine sind für diese hohen Beanspruchungen nicht geeignet. Höherwertige Materialien, wie Korundsteine, Chromkorundsteine oder Picrochromitsteine, haben zwar besser als die vorhergenannten Steinqualitäten entsprochen, jedoch war auch ihre Haltbarkeit nicht zufriedenstellend. Graphitsteine haben den Nachteil der hohen Wärmeleitfähigkeit, was zufolge der durch die Wände abfließenden Wärme zu hohen Wärmeverlusten führt. Auch eine Isolierung am kalten Steinende ist nicht zielführend, da dabei die Temperatur der Steine feuerseitig ansteigt, was den Verschleiß verstärkt.

Es ist Aufgabe der Erfindung, eine feuerfeste Auskleidung für die eingangs beschriebenen Kohlevergaser vorzusehen, welche die Nachteile der bekannten Auskleidungsmaterialien vermeidet und welche den in diesen Kohlevergasern auftretenden besonderen Beanspruchungen standhält.

Nach der Erfindung gelingt die Lösung dieser Aufgabe dadurch, daß die Auskleidung mindestens teilweise aus ungebrannten, kohlenstoffhaltigen Magnesiasteinen mit einem Kohlenstoffgehalt von 5 bis 30 Gew.-% besteht.

Ungebrannte, kohlenstoffhaltige Magnesiaprodukte werden in verschiedenen Schmelzöfen der Stahlindustrie eingesetzt. In diesen Anwendungsbereichen herrschen zumeist Temperaturen über 1600°C und ein starker Schlackenangriff von basischen Schlacken mit einem $CaO/SiO_2$-Molverhältnis von über 2. Die gute Haltbarkeit wird durch die hohe chemische Beständigkeit, die hohe Wärmeleitfähigkeit und die ausgezeichnete Temperaturwechselbeständigkeit erreicht.

Solche Steine werden unter Verwendung von Sinter- und/oder Schmelzmagnesia in einer Körnung bis zu 8 mm mit einem Zusatz eines festen Kohlenstoffträgers, z.B. in Form von Ruß, Graphit, Koks, mit Pech und Kunstharz gebunden, hergestellt.

Solcherart erzeugte Steine sind bislang nicht in den Öfen der Roheisenerzeugung und Kohlevergasung eingesetzt worden.

Die Beanspruchungsverhältnisse in den eingangs genannten Kohlevergasern sind stark abweichend von jenen in Stahlschmelzöfen. Wie erwähnt, liegt die Hauptbeanspruchung im Angriff der sauren Schlacke und in der Abrasion und Erosion der Steine, wogegen Temperaturwechselbeanspruchungen infolge des kontinuierlichen Betriebes bei Kohlevergasern nur sehr mäßig auftreten.

Bei diesen Beanspruchungsverhältnissen war ein Erfolg beim Einsatz von ungebrannten, kohlenstoffhaltigen Magnesiasteinen nicht zu erwarten, da der Angriff der sauren Schlacke bei kohlenstoffhaltigen Magnesiasteinen im allgemeinen zu einem starken Korrosionsangriff führt. Auch die Abrasions-und Erosionsfestigkeit von ungebrannten Produkten ist normalerweise erheblich niedriger als jene von gebrannten.

Bei einem versuchsmäßigen Einsatz der ungebrannten, kohlenstoffhaltigen Magnesiasteine hat sich jedoch überraschenderweise gezeigt, daß sie für die Verwendung in Kohlevergasern sehr gut geeignet sind.

Im Sinne einer Ausgestaltung der Erfindung empfiehlt es sich, wenn die aus Sinter- und/oder Schmelzmagnesia bestehende Komponente der ungebrannten, kohlenstoffhaltigen Magnesiasteine einen $Fe_2O_3$-Gehalt von unter 6 Gew.-% und einen $SiO_2$-Gehalt von unter 3 Gew.-% aufweist. Noch bessere Haltbarkeiten werden erzielt, wenn die aus Sinter- und/oder Schmelzmagnesia bestehende Komponente der Magnesiasteine einen $Fe_2O_3$-Gehalt von unter 1,5 Gew.-% und einen $SiO_2$-Gehalt von unter 1 Gew.-% aufweist.

Die Erfindung wird anhand von Ausführungsbeispielen näher erläutert:

Beispiel 1: Für die Erzeugung von ungebrannten, kohlenstoffhaltigen Magnesiasteinen wurden folgende Materialien verwendet:

|  | Schmelzmagnesia | Sintermagnesia |
|---|---|---|
| $SiO_2$ | 0,87 Gew.-% | 0,44 Gew.-% |
| $Fe_2O_3$ | 0,57 " | 0,14 " |
| $Al_2O_3$ | 0,24 " | 0,08 " |
| CaO | 1,79 " | 2,06 " |
| MgO     aus Differenz | 96,52 " | 97,24 " |
| $B_2O_3$ | 0,012 " | 0,044 " |

Diese Materialien wurden nach folgendem Rezept gemischt:

| Schmelzmagnesia | 3,0 - 5,0 mm | 10 Gew.-% |
|---|---|---|
|  | 1,0 - 3,0 mm | 23 " |
|  | 0 - 1,0 mm | 16 " |
| Sintermagnesia | 3,0 - 5,0 mm | 5 " |
|  | 1,0 - 3,0 mm | 18 " |
|  | 0 - 0,1 mm | 15 " |
| Flockengraphit (85 - 90 Gew.-% C) |  | 13 " |

Als Bindemittel wurden 5 Gew.-% Phenolharz verwendet.

Die Steine wurden mit einem Druck von 125 $N/mm^2$ gepreßt und anschließend zwecks Härtung einer thermischen Nachbehandlung unterworfen.

Diese Steine wurden in einem Einschmelzvergaser neben nitridgebundenen Korundsteinen eingesetzt und zeigten dabei nach einer Betriebsdauer von 2 Monaten einen minimalen, gleichmäßigen Verschleiß von etwa 10 mm, während die nitridgebundenen Korundsteine ein unregelmäßiges Aussehen und einen Verschleiß bis zu 50 mm aufwiesen.

Beispiel 2: Für eine weitere Steinerzeugung wurde folgende Sintermagnesia verwendet:

| | | |
|---|---|---|
| $SiO_2$ | 0,11 | Gew.-% |
| $Fe_2O_3$ | 0,07 | " |
| $Al_2O_3$ | 0,12 | " |
| CaO | 0,88 | " |
| MgO    aus Differenz | 98,81 | " |
| $B_2O_3$ | 0,005 | " |

Diese Magnesia wurde nach folgendem Rezept gemischt:

| | |
|---|---|
| Körnung  3,0 – 5,0 mm | 30 Gew.-% |
| 1,0 – 3,0 mm | 35 " |
| 0 – 1,0 mm | 15 " |
| 0 – 0,1 mm | 12 " |
| Flockengraphit (90 – 96 Gew.-% C) | 4 " |
| Ruß | 4 " |

Als Bindemittel wurde Brikettpech mit einem Erweichungspunkt nach Kraemer-Sarnow von 68°C in einer Menge von 2,9 Gew.-% verwendet.
Die Steine wurden mit einem Druck von 140 N/mm$^2$ gepreßt und bei einer Temperatur von 300°C 4 Stunden getempert.
Diese Steine wurden in einem Kohlevergaser neben nitridgebundenen Korundsteinen und Steinen nach Beispiel 1 eingesetzt und wiesen eine etwas höhere Verschleißrate als die Steine nach Beispiel 1 auf, waren aber eindeutig besser als die nitridgebundenen Korundsteine.

Patentansprüche

1. Feuerfeste Auskleidung von Kohlevergasern für die Erzeugung von Reduktionsgas in Bereichen, in welchen Schlacken mit einem $CaO/SiO_2$-Molverhältnis unter 2 in schmelzflüssiger Form vorliegen, dadurch gekennzeichnet, daß sie aus ungebrannten, kohlenstoffhaltigen Magnesiasteinen mit einem Kohlenstoffgehalt von 5 bis 30 Gew.-% besteht.

2. Auskleidung nach Anspruch 1, dadurch gekennzeichnet, daß die aus Sinter- und/oder Schmelzmagnesia bestehende Komponente der Magnesiasteine einen $Fe_2O_3$-Gehalt von unter 6 Gew.-% und einen $SiO_2$-Gehalt von unter 3 Gew.-% aufweist.

3. Auskleidung nach Anspruch 2, dadurch gekennzeichnet, daß die aus Sinter- und/oder Schmelzmagnesia bestehende Komponente der Magnesiasteine einen $Fe_2O_3$-Gehalt von unter 1,5 Gew.-% und einen $SiO_2$-Gehalt von unter 1 Gew.-% aufweist.

## Claims

1. Refractory lining of coal gasifiers for the production of reducing gas, in those zones where slags having a molar ratio of CaO/SiO$_2$ below 2 are present in molten liquid form, characterized in that it consits of unburned, carbon containing magnesia bricks having a carbon content of 5 to 30 percent by weight.

2. Lining according to claim 1, characterized in that the magnesia brick component consisting of sintered and/or fused magnesia contains less than 6 percent by weight of Fe$_2$O$_3$, and less than 3 percent by weight of SiO$_2$.

3. Lining according to claim 2, characterized in that the magnesia brick component consisting of sintered and/or fused magnesia contains less than 1.5 percent by weight of Fe$_2$O$_3$ and less than 1 percent by weight of SiO$_2$.

## Revendications

1. Revêtement réfractaire de gazéificateurs de charbon pour la production de gaz réducteur, dans des zones où des laitiers ayant un rapport molaire CaO/SiO$_2$ inférieur à 2 sont présents sous forme liquide fondue, revêtement caractérisé en ce qu'il est fait de briques de magnésie non-cuites contenant du carbone avec une teneur en carbone de 5 à 30 % en poids.

2. Revêtement selon la revendicatoin 1, caractérisé en ce que le composant des briques de magnésie constitué de magnésie frittée et/ou fondue a une teneur en Fe$_2$O$_3$ inférieure à 6 % en poids et une teneur en SiO$_2$ inférieure à 3 % en poids.

3. Revêtement selon la revendication 2, caractérisé en ce que le composant des briques de magnésie constitué de magnésie frittée et/ou fondue a une teneur en Fe$_2$O$_3$ inférieure à 1,5 % en poids et une teneur en SiO$_2$ inférieure à 1 % en poids.